# EUROPÄISCHE PATENTANMELDUNG

(11) **EP 4 234 616 A1**
(43) Veröffentlichungstag der Anmeldung: **30.08.2023**
(21) Anmeldenummer: 22158255.4
(22) Anmeldetag: 23.02.2022
(51) Int. Cl.: C08J 11/10, C08J 11/14, C08J 11/18

(54) **AUFREINIGUNG VON KUNSTSTOFFSOLVOLYSEGEMISCHEN**

(71) Anmelder: RAMPF Eco Solutions GmbH & Co. KG, 66954 Pirmasens (DE)
(72) Erfinder: KUGLER, Michael, 73432 Aalen (DE)
(74) Vertreter: Weickmann, Hans

(57) **Zusammenfassung**

Die vorliegende Erfindung betrifft ein Verfahren zum Aufreinigen eines Kunststoffsolvolysegemischs um ein Stoffgemisch zu erhalten und dessen Verwendung zur Herstellung von Kunststoffen.

## Beschreibung

Die vorliegende Erfindung betrifft ein Verfahren zum Aufreinigen eines Kunststoffsolvolysegemischs um ein Stoffgemisch zu erhalten und dessen Verwendung zur Herstellung von Kunststoffen.

Kunststoffe sind allgegenwärtige Werkstoffe und werden unter anderem als Verpackungsmaterialien, Fasern, Isolierungen, Bestandteile von Lacken und Klebstoffen, Schaumstoffe und Konstruktionswerkstoffe, z.B. im Fahrzeugbau oder der Möbelindustrie, intensiv genutzt. Üblicherweise basieren Kunststoffe größtenteils auf petrochemischen Ausgangsprodukten. Insbesondere in Zeiten zunehmender Ressourcenknappheit, aber auch in Hinblick auf die Problematik steigender Umweltverschmutzung gewinnen Recyclingverfahren vermehrt an Bedeutung.

Recycling von Kunststoffen kann den mechanischen, thermischen oder chemischen Abbau von Kunststoffen umfassen. Beim chemischen Abbau werden die Kunststoffe durch chemische Reaktion in ihre Monomere zersetzt, die als Edukte in einer Vielzahl an chemischen Verfahren wiederverwendet werden können. Die wirtschaftliche Bedeutung des chemischen Recyclings ist jedoch durch den Prozessaufwand und die verbundenen Kosten limitiert. Insbesondere sind aufwändige Aufreinigungsprozesse nötig, um die erzeugten Kunststoffabbauprodukte und die eingesetzten Chemikalien wie Lösungsmittel und Katalysatoren zu trennen.

Bekannt ist der Abbau von Kunststoffen und Kunststoffabfällen mittels Solvolyse (wie Glykolyse, Alkoholyse, Acidolyse, Aminolyse und Hydrolyse) unter Zusatz von niedermolekularen Spaltreagenzien wie Glykolen, Alkoholen, Säuren, Aminen bzw. Wasser. Die Spaltreagenzien werden dabei in der Regel im Überschuss eingesetzt um eine möglichst quantitative Umsetzung zu erhalten. Die dabei entstehenden Kunststoffsolvolysegemische sind Gemische aus unterschiedlichen, niedermolekularen Kunststoffabbauprodukten und enthalten ferner eingesetzte und nicht umgesetzte Spaltreagenzien.

Kunststoffsolvolysegemische werden teilweise als Gemisch, inklusive überschüssigem Spaltreagenzien, als Rohstoff eingesetzt. Beispielsweise werden Polyurethan (PUR)-Hartschaum-Abfälle mittels Glykolen solvolysiert. Das dabei entstehende Gemisch aus Etherpolyolen, Urethanen und freiem Glykol wird als Rohstoff bei der PUR-Hartschaumherstellung in geringen Mengen zugesetzt. Der Einsatz dieser Kunststoffsolvolysegemische ist jedoch stark beschränkt, da die überschüssigen Spaltreagenzien bei der späteren Anwendung die Eigenschaften des Endprodukts negativ beeinflussen. Ebenfalls stören Nebenprodukte des Kunststoffabbaus sowie Katalysator, der bei der Solvolyse in der Regel zugegeben werden muss, um einen ausreichenden Kunststoffabbau zu gewährleisten.

Es besteht daher Bedarf, das Recycling von Kunststoffen zu verbessern und insbesondere Verfahren bereitzustellen, bei denen die Kunststoffabbauprodukte geringere Spaltreagenz- und Nebenprodukt-Restgehalte aufweisen.

Um den Spaltreagenz-Restgehalt zu reduzieren wurde deshalb das Spaltreagenz teilweise im Unterschuss zugesetzt. Damit wird zwar der Gehalt an Spaltreagenz im Kunststoffsolvolysegemisch geringfügig reduziert, allerdings sind die dabei entstehenden Gemische höherviskos bzw. hochmolekular und liegen weiterhin als Gemisch mit Restgehalten an Katalysator und Abbaunebenprodukten vor.

Das Kunststoffsolvolysegemisch kann auch einer herkömmlichen Destillation unterzogen werden, um den Gehalt an Spaltreagenz zu reduzieren. Allerdings liegen die Kunststoffsolvolysegemische nach Destillation immer noch als unvorteilhafte Gemische von Kunststoffabbauprodukten vor und können gegebenenfalls erhöhte Katalysator-Gehalte aufweisen. Konventionelle Trennverfahren weisen ferner die Nachteile auf, dass durch die thermische Belastung Nebenreaktionen auftreten. Die für eine möglichst vollständige Entfernung der Spaltreagenzien und/oder Nebenprodukte erforderlichen hohen Destillationstemperaturen haben den Nachteil, dass durch Neben- und Rückreaktion der Kunststoffabbauprodukte die Bildung von Polymerisaten mit hohen Molmassen gefördert wird. Die dabei entstehenden Agglomerate führen zu einer Phasentrennung im Kunststoffsolvolysegemisch, was den unmittelbaren Einsatz des Kunststoffsolvolysegemischs bei der Herstellung neuer Polymere einschränkt.

Trotz der hohen Relevanz von Verfahren zum Abbau von Kunststoffen mangelt es zum aktuellen Zeitpunkt an Verfahren, die unter wirtschaftlichen Bedingungen die Auftrennung von Kunststoffsolvolysegemischen in ausreichend reine Kunststoffabbauprodukte und die Wiedergewinnung von Spaltreagenz (Lösungsmittel) ermöglichen.

Es wurde überraschenderweise gefunden, dass das gemäß dem erfindungsgemäßen Verfahren aufgereinigte Kunststoffsolvolysegemisch direkt und in hohen Anteilen - wenn nicht sogar als alleiniges Ausgangsmaterial - zur Herstellung für neue Kunststoffe eingesetzt werden kann. Das Aufreinigungsverfahren der vorliegenden Erfindung unterbindet die unerwünschte Rückreaktion der Kunstoffabbauprodukte im Kunststoffsolvolysegemisch, stellt aber dennoch sicher, dass Spaltreagenzien und/oder Nebenprodukte nahezu quantitativ entfernt werden.

Dadurch dass Spaltreagenzien durch das erfindungsgemäße Verfahren quantitativ abgetrennt werden, können die Spaltreagenzien auch im deutlichen Überschuss eingesetzt und damit die Solvolyse-Prozesse ohne bzw. mit stark reduziertem Katalysatoranteil bei niedrigen Reaktionszeiten bzw. Reaktionstemperaturen, d.h. wirtschaftlicher, gefahren werden.

Das abgetrennte Spaltreagenz kann wieder als Spaltreagenz für den nächsten Prozess eingesetzt werden (Recycling).

Die so aufgereinigten Kunststoffsolvolysegemische sind sowohl hinsichtlich Qualität als auch technischer Eigenschaften (beispielsweise Homogenität, Viskosität, Lagerstabilität, Gehalt an niedermolekularen Monomeren, Nebenprodukten) als Polymerrohstoffe geeignet.

Durch den Einsatz der erfindungsgemäßen Kunststoffsolvolysegemische zur Herstellung von Kunststoffen werden außerdem Entsorgungskosten reduziert. Insgesamt entsteht auf diese Weise ein Kreislauf, der ökonomische und ökologische Vorteile vereint.

Ein erster Aspekt der vorliegenden Erfindung betrifft ein Verfahren zum Aufreinigen eines Kunststoffsolvolysegemischs, umfassend die Schritte:
(a) Bereitstellen des Kunststoffsolvolysegemischs;
(b) Behandeln des Kunststoffsolvolysegemischs bei einem Druck < 1 mbar und einer Temperatur im Bereich von 90 bis 170 °C; und
(c) Entfernen von mindestens einer Verbindung mit einer molaren Masse von ≤ 250 g/mol während Schritt (b) um ein Stoffgemisch zu erhalten.

Das in Schritt (a) bereitgestellte Kunststoffsolvolysegemisch umfasst typischerweise Kunststoffabbauprodukt, Lösungsmittel, insbesondere Spaltreagenz, und ggf. mindestens einen Katalysator. Bevorzugt ist das Kunststoffsolvolysegemisch flüssig bei Raumtemperatur (20°C) und stärker bevorzugt in Form einer Lösung. In einer Ausführungsform wird das in Schritt (a) bereitgestellte Kunststoffsolvolysegemisch vor Schritt (a) einer Fest/Flüssig-Filtration unterzogen.

Der hierin verwendete Ausdruck "Kunststoffsolvolysegemisch" bedeutet, dass das bereitgestellte Gemisch durch Solvolyse von Kunststoff erhalten ist. Solvolysereaktionen von Kunststoffen sind dem Fachmann bekannt und umfassen beispielsweise eine Glykolyse, Alkoholyse, Acidolyse, Aminolyse oder Hydrolyse von Kunststoff. Die Solvolysereaktion erfolgt unter Zusatz von Solvolyse-Spaltreagenzien wie Glykolen (bei der Glykolyse), Alkoholen (bei der Alkoholyse), Säuren (bei der Acidolyse), Aminen (bei der Aminolyse) oder Wasser (bei der Hydrolyse).

Der Kunststoff kann aus der Gruppe, bestehend aus Polyurethan, Polyester, Polyetherester, Polyamid, Polycarbonat, Polyisocyanurat oder einer Mischung davon ausgewählt sein. In einer bevorzugten Ausführungsform kann der Kunststoff aus der Gruppe, bestehend aus Polyurethan und/oder Polyester, insbesondere Polyurethan, insbesondere Polyesterpolyurethan und/oder Polyetherpolyurethan ausgewählt sein.

Das in Schritt (a) bereitgestellte Kunststoffsolvolysegemisch umfasst bevorzugt mindestens ein Lösungsmittel, insbesondere ein Solvolyse-Spaltreagenz. Das Spaltreagenz ist bevorzugt ausgewählt aus Alkoholen, Glykolen, Aminen, Wasser oder Mischungen davon. Geeignete Solvolyse-Spaltreagenzien sind dem Fachmann bekannt.

In einer Ausführungsform, insbesondere bei der Aminolyse, ist das Spaltreagenz mindestens ein Polyamin, insbesondere mindestens ein Diamins, wie zum Beispiel Ethandiamin, Propandiamin, Butandiamin und/oder Hexandiamin, und/oder ein Triamin, wie zum Beispiel Ethantriamin, Propantriamin, Butantriamin, Pentantriamin und/oder Hexantriamin, und/oder Hydroxylamine wie z.B. Ethanolamin, bevorzugt ein Diamin.

In einer bevorzugten Ausführungsform, insbesondere bei der Alkoholyse oder Glykolyse, ist das Spaltreagenz ausgewählt aus mindestens einem Monoalkohol, insbesondere Methanol, Ethanol, Propanol, Butanol, Pentanol und/oder Hexanol, einem Diol, insbesondere Ethylenglykol, Diethylenglykol, Polyethylenglykol, Propylenglykol, Dipropylenglykol, Polypropylenglykol, Butandiol, Pentandiol und/oder Hexandiol, einem Triol, insbesondere Glycerin und/oder Trimethylolpropan, und einem Tetrol, insbesondere Pentaaerythrol, und Hydroxycarbonsäuren, insbesondere Rizinolsäure und Milchsäure.

In einer bevorzugten Ausführungsform, insbesondere bei der Acidolyse ist das Spaltreagenz ausgewählt aus mindestens einer Polycarbonsäure, insbesondere einer Dicarbonsäure, wie zum Beispiel Bernsteinsäure, Glutarsäure, Adipinsäure, Hexandicarbonsäure, Heptandicarbonsäure, Azealinsäure, Sebacinsäure, Decandicarbonsäure, Dodecandicarbonsäure und/oder Phthalsäure, und/oder einer Tricarbonsäure, wie zum Beispiel Trimelittsäure, und/oder mindestens einem Polycarbonsäureanhydrid, insbesondere einem Dicarbonsäureanhydrid, wie zum Beispiel Bernsteinsäure-, Glutarsäure-, Adipinsäure-, Hexandicarbonsäure-, Azealinsäure- und/oder Phthalsäureanhydrid, und/oder einem Tricarbonsäureanhydrid, wie zum Beispiel Trimelittsäureanhydrid, besonders bevorzugt aus mindestens einer Polycarbonsäure, stärker bevorzugt mindestens einer Dicarbonsäure.

Eine Hydrolyse wird unter Verwendung von Wasser als Spaltreagenz durchgeführt.

In einer Ausführungsform weist das Lösungsmittel, insbesondere das Spaltreagenz, ein Molekulargewicht von 15-250 g/mol, bevorzugt 30-180 g/mol auf.

Der Gehalt an Lösungsmittel oder Spaltreagenz in dem bereitgestellten Kunststoffsolvolysegemisch kann beispielsweise mehr als 40 Gew,%, bevorzugt 50-95 Gew.%, beispielsweise 70-90 Gew.%, insbesondere bei einem Alkoholysegemisch, oder 40-60 Gew.%, insbesondere bei einem Glykolysegemisch, bezogen auf das Gesamtgewicht des Gemischs betragen.

In einer weiteren Ausführungsform wird die Solvolyse ferner durchgeführt unter Verwendung mindestens eines Katalysators geeignet zum Abbau von Kunststoffen, insbesondere eines basischen und/oder metallorganischen Katalysators.

Der mindestens eine basische Katalysator kann ausgewählt sein aus der Gruppe bestehend aus Alkalimetallalkoholat, insbesondere Natriummethanolat, Kaliummethanolat, Natriumethanolat, Kaliumethanolat, Natriumpropanolat, Kaliumpropanolat, Natriumbutanolat und/oder Kaliumbutanolat, Alkalimetallhydroxid, insbesondere Natriumhydroxid und/oder Kaliumhydroxid, und Alkalimetallacetat, insbesondere Natriumacetat und Kaliumacetat.

Der mindestens eine metallorganische Katalysator kann ausgewählt sein aus der Gruppe bestehend aus Zink-Acetat, Magnesium-Acetat, Cobalt-Acetat, Zinn-Octoat, Dibutylzinndilaurat, Titantetraisopropanolat und Titantetrabutanolat. Ein Metallkatalysator wie Tetrabutyltitanat liegt insbesondere vor, wenn das Lösungsmittel (d.h. das Solvolyse-Spaltreagenz) ein Glykol, wie Diethylenglykol, ist.

Der Gehalt an Katalysator in dem bereitgestellten Kunststoffsolvolysegemisch kann beispielsweise mehr als 0 und bis zu 10 Gew.%, bevorzugt 0,1-5 Gew.%, insbesondere 0,5-3 Gew.%, bezogen auf das Gesamtgewicht des Gemischs betragen.

In einer Ausführungsform wird die Solvolyse bei erhöhter Temperatur, insbesondere bei einer Temperatur im Bereich von 30-300 °C, stärker bevorzugt 100-250 °C, stärker bevorzugt 140-220 °C, und gegebenenfalls bei erhöhtem Druck, insbesondere bei einem Druck von 1-200 bar, bevorzugt 5-50 bar, stärker bevorzugt 10-30 bar, durchgeführt.

In einer weiteren Ausführungsform wird die Solvolyse in einem Solvolyse-Reaktor durchgeführt, welcher bevorzugt ein Rührwerk umfasst. Das Rührwerk kann beispielsweise axial oder radial fördern und gegebenenfalls einstufig oder mehrstufig rühren. Ferner kann der Solvolyse-Reaktor gasdicht verschlossen sein. In einer Ausführungsform kann in dem Solvolyse-Reaktor eine sauerstoffreduzierte oder sauerstofffreie Atmosphäre vorliegen. Gegebenenfalls kann eine Inertgasatmosphäre im Reaktor vorliegen. Beispiele für ein geeignetes Inertgas sind Stickstoff und Edelgase, wie zum Beispiel Argon.

Das Kunststoffsolvolysegemisch umfasst bevorzugt mindestens ein Kunststoffabbauprodukt, mindestens ein Spaltreagenz und ggf. mindestens einen Katalysator.

Das durch Solvolyse erhaltene Kunststoffabbauprodukt kann aus Polyaminen, Polyolen, Carbamaten, Polycarbonsäuren, Polycarbonsäureestern, Hydroxy-Carbonsäuren, Hydroxy-Carbonsäureestern oder Mischungen davon ausgewählt sein. Vorzugsweise ist das Kunststoffabbauprodukt ausgewählt aus Polyaminen, Polyolen, Carbamaten, Polycarbonsäuren und/oder Polycarbonsäureestern. In einer bevorzugten Ausführungsform umfasst das Kunststoffabbauprodukt mindestens ein Polyol und mindestens ein Polyamin.

Das Kunststoffabbauprodukt kann ein gewichtsmittleres Molekulargewicht von 50-50.000 g/mol, bevorzugt 80-10.000 g/mol aufweisen.

Der Gehalt an Kunststoffabbauprodukt in dem bereitgestellten Kunststoffsolvolysegemisch kann beispielsweise bis zu 70 Gew,%, bevorzugt 5-60 Gew.%, wie 5-20 Gew.%, insbesondere bei einem Glykolysegemisch, oder 40-60 Gew.%, insbesondere bei einem Alkoholysegemisch, bezogen auf das Gesamtgewicht des Gemischs betragen.

In einer Ausführungsform umfasst das Kunststoffabbauprodukt mindestens ein Polyol, insbesondere wenn der solvolysierte Kunststoff ein Polyurethan und/oder Polyester ist. Der Begriff "Polyol" bezieht sich auf Verbindungen mit mindestens 2, das heißt 2, 3, 4 oder mehr, Hydroxygruppen. Ein Polyol im Sinne der Erfindung ist bevorzugt ein Polyetherpolyol, insbesondere aliphatisches, z.B. Polyethylenglykol oder Polypropylenglykol, oder aromatisches Polyetherpolyol, Polyesterpolyol, insbesondere aliphatisches oder aromatisches Polyesterpolyol, Diethylenglykol, Dipropylenglykol, C1-6-Alkylenglykol, insbesondere Hexandiol, Butandiol, Ethylenglykol und Neopentylglykol, C1-8-Alkylenpolyol, insbesondere Trimethylolpropan und Glycerin, oder eine Mischung davon.

In einer Ausführungsform umfasst das Kunststoffabbauprodukt mindestens eine Polycarbonsäure, insbesondere wenn der solvolysierte Kunststoff ein Polyester ist. Eine Polycarbonsäure im Sinne der Erfindung kann beispielsweise eine aromatische Polycarbonsäure, bevorzugt Phthalsäure oder Terephthalsäure, oder eine aliphatische Polycarbonsäure, bevorzugt C1-12-Alkylendicarbonsäure, stärker bevorzugt C1-6-Alkylendicarbonsäure, z.B. Adipinsäure, Bernsteinsäure oder Glutarsäure, Ester oder Mischungen davon umfassen.

In einer Ausführungsform umfasst das Kunststoffabbauprodukt mindestens eine Hydroxy-funktionalisierte Carbonsäure, insbesondere wenn der solvolysierte Kunststoff ein Polyester ist. Eine Hydroxy-funktionalisierte Carbonsäure im Sinne der Erfindung kann beispielsweise eine Hydroxyhexamethylencarbonsäure, eine Hydroxypopansäure wie Milchsäure, eine Hydroxyfettsäure oder Hydroxybuttersäure umfassen.

In einer Ausführungsform umfasst das Kunststoffabbauprodukt mindestens ein Polyamin, insbesondere wenn der solvolysierte Kunststoff ein Polyamid und/oder ein Polyurethan ist. Der Begriff "Polyamin" bezieht sich auf Verbindungen mit mindestens 2, das heißt 2, 3, 4 oder mehr, bevorzugt 2 oder 3, Aminogruppen. Ein Polyamin im Sinne der Erfindung kann beispielsweise ein aromatisches Diamin, bevorzugt 2,4-Diaminotoluol, 2,6-Diaminotoluol, 4,4'-Diaminodiphenylmethan, 2,2'-Diaminodiphenylmethan, 2,4'-Diaminodiphenylmethan oder Anilin, ein aliphatisches Polyamin, beispielsweise ein lineares aliphatisches Polyamin wie z.B. Hexamethylendiamin und Triethylentetramin, oder ein cyclisches aliphatisches Polyamin wie Isophorondiamin umfassen.

In einer Ausführungsform umfasst das Kunststoffsolvolysegemisch:
i. mindestens ein Polyol und/oder Polyamin, bevorzugt mit einer molaren Masse im Bereich von 50-10.000 g/mol, stärker bevorzugt 60-6.000 g/mol; und
ii. mindestens ein Spaltreagenz ausgewählt aus Alkohol, Polycarbonsäure, Polycarbonsäureanhydrid, Polyamin und/oder Wasser, mit einer molaren Masse von ≤ 250 g/mol, bevorzugt im Bereich von 15 bis 180 g/mol.

Das Polyol in Komponente i. ist bevorzugt ein aliphatisches Polyol, ein aromatisches Polyol, ein Polyesterpolyol und/oder ein Polyetherpolyol, stärker bevorzugt ein aliphatisches Diol, ein aromatisches Diol, ein Polyesterdiol und/oder ein Polyetherdiol.

Das Polyol in Komponente i. kann eine molare Masse im Bereich von 50-10.000 g/mol, bevorzugt 60-6.000 g/mol aufweisen.

Das Polyamin in Komponente i. ist bevorzugt ein aliphatisches Polyamin, ein aromatisches Polyamin, ein Polyesterpolyamin und/oder ein Polyetherpolyamin, stärker bevorzugt ein aliphatisches Diamin, ein aromatisches Diamin, ein Polyesterdiamin und/oder ein Polyetherdiamin.

Das Polyamin in Komponente i. kann eine molare Masse im Bereich von 20-1000 g/mol, bevorzugt 60-600 g/mol aufweisen.

Der mindestens eine Alkohol in Komponente ii. ist bevorzugt mindestens ein Monoalkohol, insbesondere Methanol, Ethanol, Propanol, Butanol, Pentanol und/oder Hexanol, Hydroxycarbonsäure, Hydroxylamin, ein Diol, insbesondere Ethylenglykol, Diethylenglykol, Polyethylenglykol, Propylenglykol, Dipropylenglykol, Polypropylenglykol, Butandiol, Pentandiol und/oder Hexandiol, ein Triol, insbesondere Glycerin und/oder Trimethylolpropan, und/oder ein Polyol, stärker bevorzugt mindestens ein Monoalkohol und/oder ein Diol, stärker bevorzugt mindestens ein Diol.

Die mindestens eine Polycarbonsäure in Komponente ii. ist bevorzugt mindestens eine Dicarbonsäure, insbesondere Bernsteinsäure, Glutarsäure, Adipinsäure, Hexandicarbonsäure, Azealinsäure und/oder Phthalsäure, und/oder eine Tricarbonsäure, insbesondere Trimelittsäure.

Das mindestens eine Polycarbonsäureanhydrid in Komponente ii. ist bevorzugt mindestens ein Dicarbonsäureanhydrid, insbesondere Bernsteinsäure-, Glutarsäure-, Adipinsäure-, Hexandicarbonsäure-, Azealinsäure- und/oder Phthalsäureanhydrid, und/oder ein Tricarbonsäureanhydrid, insbesondere Trimelittsäureanhydrid.

Das mindestens eine Polyamin in Komponente ii. ist bevorzugt mindestens ein Diamin, insbesondere Ethandiamin, Propandiamin, Butandiamin, Pentandiamin und/oder Hexandiamin, und/oder ein Triamin, insbesondere Ethantriamin, Propantriamin, Butantriamin und/oder Hexantriamin, stärker bevorzugt mindestens ein Diamin.

Komponente i. und Komponente ii. sind bevorzugt unterschiedlich.

In einer weiteren Ausführungsform umfasst das Kunststoffsolvolysegemisch ferner:
iii. mindestens einen Katalysator, insbesondere geeignet zum Abbau von Kunststoffen, bevorzugt mindestens einen basischen Katalysator und/oder einen metallorganischen Katalysator; und
iv. gegebenenfalls mindestens ein Additiv, insbesondere ausgewählt aus der Gruppe, bestehend aus Füllstoff, Pigment, Flammschutzmittel, Weichmacher und Stabilisator.

Der mindestens eine basische Katalysator in Komponente iii. kann ein Alkalimetallalkoholat, insbesondere Natriummethanolat, Kaliummethanolat, Natriumethanolat, Kaliumethanolat, Natriumpropanolat, Kaliumpropanolat, Natriumbutanolat und/oder Kaliumbutanolat, Alkalimetallhydroxid, insbesondere Natriumhydroxid und/oder Kaliumhydroxid, und/oder Alkalimetallacetat, insbesondere Natriumacetat und/oder Kaliumacetat, sein.

Der mindestens eine metallorganische Katalysator in Komponente iii. kann ausgewählt sein aus der Gruppe, bestehend aus Zink-Acetat, Magnesium-Acetat, Cobalt-Acetat, Zink-Acetat, Magnesium-Acetat, Cobalt-Acetat, Zinn-Octoat, Dibutylzinndilaurat, Titantetraisopropanolat und Titantetrabutanolat.

Komponente i. macht bevorzugt 5-80 Gew.-% der Gesamtmasse des Kunststoffsolvolysegemischs aus.

Komponente ii. macht bevorzugt 20-95 Gew.-% bezogen auf die Gesamtmasse des Kunststoffsolvolysegemischs aus.

Komponente iii. macht bevorzugt 0-30 Gew.-%, stärker bevorzugt 1-20 Gew.-% bezogen auf die Gesamtmasse des Kunststoffsolvolysegemischs aus.

Komponente iv. macht bevorzugt bevorzugt 0-40 Gew.-%, stärker bevorzugt 1-30 Gew.-% bezogen auf die Gesamtmasse des Kunststoffsolvolysegemischs aus.

Der Druck in Schritt (b) kann < 1 mbar, bevorzugt ≤ 0,5 mbar, bevorzugt ≤ 0,1 mbar, stärker bevorzugt von 0,0001 bis 0,1 mbar, betragen.

Die Temperatur in Schritt (b) kann im Bereich von 60-170 °C, bevorzugt von 80-150 °C, stärker bevorzugt von 90-130 °C, liegen.

In einer weiteren Ausführungsform wird das Kunststoffsolvolysegemisch in Schritt (b) für 2-10.000, Sekunden, bevorzugt 5-5.000 Sekunden, stärker bevorzugt 10-500 Sekunden behandelt.

In einer weiteren Ausführungsform wird das Verfahren in einem Dünnschichtverdampfer oder einem Kurzwegverdampfer, stärker bevorzugt in einem Kurzwegverdampfer durchgeführt.

Die oben genannten Verdampfer umfassen grundsätzlich eine beheizte Oberfläche als Heizvorrichtung zur Überführung der aus einer Mischung abzutrennenden Substanz aus der Flüssigphase in die Gasphase (unter Bildung der Brüden) sowie eine Kondensationsvorrichtung, an der die separierte Gasphase (die Brüden) wieder kondensiert werden kann.

Bei einem Dünnschichtverdampfer wird die aufzutrennende Mischung üblicherweise über ein rotierendes Verteilersystem, welches auf einem zylindrischen Heizmantel des Dünnschichtverdampfers sitzt, von oben auf dem Heizmantel verteilt. Das Gemisch fließt aufgrund der Gravitation an der Innenwand des Heizmantels hinunter und bildet einen Flüssigkeitsfilm. Ein mechanisches Wischsystem im Inneren des Heizmantels kann für eine gleichmäßige Verteilung und permanente Durchmischung der Mischung auf der Innenwand des Heizmantels sorgen. Die leichter siedende Komponente der Mischung verdampft aus dem Flüssigkeitsfilm heraus und bildet die Brüden. Die Brüden werden aus dem Verdampfer geleitet und einem nachgeschalteten Außenkondensator zur Kondensation zugeführt. Dieses Verfahren zeichnet sich insbesondere durch eine kurze Verweilzeit, niedrige Arbeitsdrücke und damit niedrige Verdampfungstemperaturen aus.

Im Unterschied zum Dünnschichtverdampfer ist bei einem Kurzwegverdampfer der Kondensator üblicherweise in das Innere des Heizmantels des Verdampfers verlagert. Die aus dem Flüssigkeitsfilm austretenden Brüden müssen nun lediglich einen kurzen Weg innerhalb des Verdampfers zurücklegen, bevor sie auf der Oberfläche des Innenkondensators kondensieren. Da die erforderliche Druckdifferenz für den Brüdentransport über diese kurze Entfernung äußerst gering ist, können sehr niedrige Arbeitsdrücke realisiert werden. Die notwendigen Verdampfungstemperaturen sind deshalb sehr niedrig.

Das erfindungsgemäße Verfahren kann ein kontinuierliches Verfahren sein.

Die mindestens eine Verbindung in Schritt (c) ist bevorzugt Spaltreagenz und weist stärker bevorzugt eine molare Masse von 25-250 g/mol, stärker bevorzugt von 30-200 g/mol, auf.

Die mindestens eine Verbindung in Schritt (c) umfasst bevorzugt ein Spaltreagenz und ist stärker bevorzugt ausgewählt aus der Gruppe, bestehend aus Alkohol, Polycarbonsäure, Polycarbonsäureanhydrid, Carbonsäureester, Polyamin, Wasser und Formaldehyd.

Der Alkohol in Schritt (c) kann ein Monoalkohol, insbesondere Methanol, Ethanol, Propanol, Butanol, Pentanol und/oder Hexanol, ein Diol, insbesondere Ethylenglykol, Diethylenglykol, Polyethylenglykol, Propylenglykol, Dipropylenglykol, Polypropylenglykol, Butandiol, Pentandiol und/oder Hexandiol, ein Triol, insbesondere Glycerin und/oder Trimethylolpropan und/oder ein Polyol sein, bevorzugt ein Monoalkohol und/oder ein Diol, stärker bevorzugt ein Diol.

Die Polycarbonsäure in Schritt (c) kann eine Dicarbonsäure, insbesondere Bernsteinsäure, Glutarsäure, Adipinsäure, Hexandicarbonsäure, Azealinsäure und/oder Phthalsäure, und/oder eine Tricarbonsäure, insbesondere Trimelittsäure, sein.

Das Polycarbonsäureanhydrid in Schritt (c) kann ein Dicarbonsäureanhydrid, insbesondere Bernsteinsäure-, Glutarsäure-, Adipinsäure-, Hexandicarbonsäure-, Azealinsäure- und/oder Phthalsäureanhydrid, und/oder ein Tricarbonsäureanhydrid, insbesondere Trimelittsäureanhydrid, sein.

Das Polyamin in Schritt (c) kann ein Diamin, insbesondere Ethandiamin, Propandiamin, Butandiamin, Hexandiamin, Toluoldiamin und/oder Diaminodiphenylmethan, und/oder ein Triamin, insbesondere Ethantriamin, Propantriamin, Butantriamin und/oder Hexantriamin, sein, bevorzugt ein Diamin.

Das nach Schritt (c) erhaltene Stoffgemisch ist im Wesentlichen frei von der mindestens einen Verbindung in Schritt (c). "Im Wesentlichen frei von der mindestens einen Verbindung in Schritt (c)" bedeutet bevorzugt, dass das nach Schritt (c) erhaltene Stoffgemisch 0,05-50 Gew.-%, stärker bevorzugt 0,1-20 Gew.-%, stärker bevorzugt 0,5-8 Gew.-%, der mindestens einen Verbindung in Schritt (c) enthält, bezogen auf das Gesamtgewicht des nach Schritt (c) erhaltenen Stoffgemischs.

Der Anteil der Verbindung im Stoffgemisch nach Schritt (c) ist gegenüber dem Anteil der Verbindung im Kunststoffsolvolysegemisch nach Schritt (a) in einer bevorzugten Ausführungsform um 80 % reduziert. Der Gehalt der Verbindung kann mittels auf dem Fachgebiet bekannten Verfahren zur Quantifizierung von Substanzen in einer Mischung, wie beispielsweise GC-MS, bestimmt werden.

Das nach Schritt (c) erhaltene Stoffgemisch weist bevorzugt eine Hydroxylzahl (OHZ) im Bereich von 20-600 mg KOH, stärker bevorzugt im Bereich von 50 bis 95 mg KOH, stärker bevorzugt 60-90 mg KOH auf. Die OHZ ist ein Maß für den Gehalt an Hydroxylgruppen in organischen Substanzen. Verfahren zur Bestimmung der OHZ sind auf dem Fachgebiet bekannt und beispielsweise in DIN 53240 beschrieben.

Die im Schritt (c) entfernte mindestens eine Verbindung kann in einer Solvolyse als Spaltreagenz wieder eingesetzt werden. Aufgrund der hohen Kosten von Spaltreagenzien für die Solvolyse, insbesondere im Fall von Polyaminen, ist ein Abtrennen von nicht reagiertem Spaltreagenz aus einem Kunststoffsolvolysegemisch wirtschaftlich besonders vorteilhaft.

Vor oder nach dem erfindungsgemäßen Verfahren kann Katalysator durch geeignete, dem Fachmann bekannte Mittel, wie zum Beispiel Filtration wiedergewonnen und ggf. einer Solvolyse zugeführt werden.

Das erfindungsgemäße Aufreinigungsverfahren ist den im Stand der Technik bekannten Aufreinigungsverfahren überlegen.

Üblicherweise liegen nach der Solvolyse Substanzen, z.B. Spaltreagenz oder Nebenprodukte, im Kunststoffsolvolysegemisch vor, die die unmittelbare Weiterverarbeitung des Kunststoffsolvolysegemischs zur Herstellung von neuen Kunststoffen erschweren oder gar verhindern. Das erfindungsgemäße Verfahren ist in der Lage, diese Substanzen aus dem Kunststoffsolvolysegemisch nahezu quantitativ zu entfernen. Überraschenderweise wird gleichzeitig sichergestellt, dass die bei einer konventionellen Aufreinigung stattfindenden Nebenreaktionen zu Polymerisat oder höhermolekularen Nebenprodukten weitgehend vermieden werden können. Dadurch bleibt das aufgereinigte Kunststoffsolvolysegemisch niedrigviskos, homogen und lagerstabil, ohne dass ein Zusatz von Stabilisatoren wie Emulgatoren notwendig wäre.

Im Gegensatz zu herkömmlichen Recyclaten können die gemäß erfindungsgemäßen Verfahren erhältlichen Stoffgemische in größeren Konzentrationen oder gar als alleiniger Baustein zur Herstellung von Kunststoffen, wie z.B. Polyurethan, Polyester, Polycarbonat und/oder Polyamid, stärker bevorzugt Polyurethan und/oder Polyester, noch stärker bevorzugt Polyurethan, eingesetzt werden.

Ein weiterer Vorteil des erfindungsgemäßen Verfahrens besteht darin, dass bei der der Aufreinigung vorangehenden Solvolyse die Spaltreagenzien problemlos im Überschuss eingesetzt werden können, da danach eine effektive Aufreinigung sichergestellt ist. Die Solvolyse selbst kann dann quantitativ bei niedrigen Temperaturen und niedrigen Katalysatorzusätzen bzw. ohne Katsalysator durchgeführt werden.

Ein weiterer Aspekt der Erfindung betrifft daher die Verwendung des nach Schritt (c) erhaltenen Stoffgemischs zur Herstellung eines Polymers, insbesondere eines Polyurethans, Polyesters, Polycarbonats und/oder Polyamids, stärker bevorzugt eines Polyurethans und/oder Polyesters, noch stärker bevorzugt eines Polyurethans.

Ein weiterer Aspekt der Erfindung betrifft das Stoffgemisch, erhältlich nach dem oben beschriebenen Verfahren.

Die so hergestellten Polymerprodukte sind insbesondere arm an leicht flüchtigen Substanzen. Damit ist die Emission gesundheitsschädlicher Substanzen aus den Polymerprodukte ausgeschlossen und die Verbrauchersicherheit gewährleistet.

Weiterhin soll die vorliegende Erfindung durch die nachfolgenden Beispiele erläutert werden.

### Beispiel 1 (Vergleichsbeispiel)

500 g Dipropylenglykol (Spaltreagenz) werden im Überschuss vorgelegt und auf 200°C aufgeheizt. In die 200°C heiße Vorlage werden unter Rühren und N2-Atmosphäre 500 g Polyurethan-Weichschaum-Reststoffe (Standardschaum auf Basis TDI und Etherpolyolen zur Herstellung von Matratzen) innerhalb von 1h zudosiert.

Nach einer weiteren Reaktionszeit von 2 h entsteht ein homogenes, braunes, klares Polyolgemisch (Kunststoffsolvolysegemisch) mit einer Hydroxylzahl von 434 mg KOH/g und einer Viskosität von 340 mPas/25°C.

Aufgrund des hohen Anteils an Spaltreagenz und der damit verbundenen hohen Hydroxylzahl kann dieses Stoffgemisch die bei der Weichschaum-Herstellung eingesetzten Standardpolyole (Hydroxylzahl 28-56 mg KOH/g) nicht substituieren.

Bereits bei Zusätzen von 1-5% dieses Stoffgemischs in Weichschaum-Formulierungen (Substitution des Etherpolyols) ändern sich die Weichschaum-Eigenschaften (z.B. Stauchhärte) drastisch, so dass eine Rückführung des Stoffgemischs in die Weichschaum-Herstellung nicht möglich ist.

### Beispiel 2 (Vergleichsbeispiel)

Um die Hydroxylzahl des Kunststoffsolvolysegemischs zu reduzieren wird das Spaltreagenz Dipropylenglykol reduziert. Um ausreichende Reaktionszeiten zu erreichen wird die Temperatur erhöht und ein Katalysator zugesetzt.

200 g Dipropylenglykol (Spaltreagenz) werden mit 0,1 % Katalysator (Titanbutylat) versetzt und auf 210°C aufgeheizt.

In die 210°C heiße Vorlage werden unter N2 (Inertisierung) innerhalb von 4 h 400g Polyurethan Weichschaum-Reststoffe (Standard Weichschaum auf Basis TDI und Etherpolyol) zudosiert.

Nach einer weiteren Reaktionszeit von 4 h entsteht ein hochviskoses, agglomeriertes Kunststoffsolvolysegemisch mit einer Hydroxylzahl von 278 mg KOH/g.

Bereits eine geringe Reduktion des Spaltreagenzes führt aufgrund der Gleichgewichtsreaktion zu längeren Reaktionszeiten und zu grob agglomerierten, partikelhaltigen und hochviskosen Kunststoffsolvolysegemisch, das für die Schaumherstellung nicht verwertbar ist.

### Beispiel 3 (Vergleichsbeispiel)

500 g Diproplenglykol und 500 g Polyurethan-Weichschaum werden gemäß Beispiel 1 umgesetzt.

Nach einer Nachreaktion von 2h wird bei 200°C ein Vakuum angelegt und das Spaltreagenz unter Vakuum abdestilliert.

Nach einer Destillationszeit von 10 h mit einem Endvakuum von 50 mbar absolut konnten 240 g Diproplyenglykol abdestillert werden. Durch die lange Destillationszeit bei höheren Temperaturen erhöhte sich durch die thermische Belastung die Konzentration an unerwünschten, toxischen Nebenprodukten wie TDA (Toluylendiamin). Durch die Gleichgewichtsverschiebung kam es während der Abdestillation des Spaltreagenzes zum Molmasse-Aufbau und damit zu Viskositätserhöhungen und Separationen (Phasentrennung).

Aufgrund der Reduktion/Abdestillation des Spaltreagenzes ändert sich die Löslichkeit/Mischbarkeit des Gemisches und bei den höheren Temperaturen neigen die Bestandteile des Gemisches zur Agglomeration/Phasentrennung.

Aus der ursprünglichen, klaren und homogenen entstand eine stark agglomerierte, hochviskose Dispsersion mit Agglomeraten über 100µm, die als Polyolkomponente für die Schaumherstellung nicht einsetzbar ist.

### Beispiel 4: (Vergleichsbeispiel)

500 g Dipropylenglykol und 500g Polyurethan-Weichschaum werden gemäß Beispiel 1 umgesetzt.

Um die Hydroxylzahl zu reduzieren wird das Spaltreagenz unter Vakuum abdestilliert. Um Molmasse-Aufbau und Agglomerationen/Phasentrennungen (Beispiel 3) zu vermeiden wird bei niedrigen Temperaturen abdestilliert: Das Kunststoffsolvolysegemisch wurde abgekühlt und bei 120°C und 13 mbar das Spaltreagenz abdestilliert.

Nach 1 h Destillationszeit kam die Destillation zum Erliegen. Es konnten nur 3% Spaltreagenz abdestilliert werden, die Hydroxylzahl des Stoffgemischs reduzierte sich nur auf 425 mg KOH/g. Die Sumpftemperatur wurde auf 130°C erhöht und die Destillation bei 13mbar fortgefahren. Die Sumpftemperatur wurde weiterhin erhöht. Nach 4h Destillation bei 130°C Sumpftemperatur und 13 mbar Vakuum kam die Destillation nach 3,5 h zum Erliegen. Es konnten nur 22,6% des Spaltreagenzes abdestilliert werden. Die Hydroxylzahl reduzierte sich lediglich auf 369 mg KOH/g. Das Stoffgemisch ist homogen, klar.

Die Sumpftemperatur wurde nochmals um 10°C auf 140°C erhöht um weiteres Spaltreagenz abdestillieren zu können. Nach weiteren 1,5 h Destillationszeit bei 140°C konnten weitere 35,7 % an Spaltreagenz abdestilliert werden bevor die Destillation zum Erliegen kam. Die Hydroxylzahl reduzierte sich nur auf 282 mg KOH/g. Das Stoffgemisch ist nicht mehr klar, sondern enthält grobe Agglomerate >100µm.

Das Spaltreagenz konnte nicht quantitativ abgetrennt werden. Es konnten lediglich 61,2 % Spaltreagenz abdestilliert und somit die Hydroxylzahl nur auf 282 mg KOH/g reduziert werden. Damit kann auch dieses Stoffgemisch nicht oder nicht im nennenswerten Umfang als Rohstoff für die Weichschaum-Herstellung eingesetzt werden.

Um überhaupt destillieren zu können waren höhere Sumpftemperaturen nötig, die wiederum zur nachteiligen Bildung von höheren Molmassen, Agglomeraten/ Phasentrennungen und Nebenprodukten führen.

### Beispiel 5:

5000 g Diproyplenglykol und 5000 g Polyurethan-Weichschaum werden gemäß Beispiel 1 umgesetzt. Nach einer Nachreaktion von 2h wird das erhaltene Kunststoffsolvolysegemisch mit einer Hydroxylzahl von 436 mg KOH/g abgekühlt und als Feed kontinuierlich in einen Kurzwegverdampfer eingebracht.

Bei einer Verdampfermantel-Temperatur von 90°C und einem Druck von 0,04 mbar wurden kontinuierlich 42,6 Gew.-% abdestilliert (85,2% des Spaltreagenzes).

Das verbleibende Stoffgemisch (57,4%) ist flüssig, feindispers (disperse Anteile <10µm) und absolut lagerstabil. Die Hydroxylzahl des Produktes beträgt 132 mg KOH/g.

Das Stoffgemisch kann direkt als Polyolkomponente zur Herstellung von PolyurethanKunststoffen eingesetzt werden. Aufgrund der niedrigen Destillationstemperaturen, sind die hergestellten Stoffgemische flüssig, homogen, phasen- und lagerstabil. Bei den niedrigen Temperaturen ist die Rückreaktion (Molmasse-Aufbau) kinetisch im signifikanten Maß gehemmt. Ebenso sind die Stoffgemische bei diesen niedrigen Temperaturen phasenstabil, d.h. es kommt nicht zu Agglomerationen/Separationen.

Aufgrund der niedrigen Hydroxylzahl sind auch in der PUR-Weichschaumherstellung höhere Zusätze an Stoffgemisch im Bereich von mindestens 20-50% ohne weiteres möglich.

Durch die verfahrenstechnisch idealen Bedingungen im Dünnschicht-/Kurzwegverdampfer kann das Spaltreagenz auch bei vorteilhaften niedrigen Temperaturen quantitativ (>85%) und wirtschaftlich abdestilliert werden.

Das abgetrennte Spaltreagenz (hier Dipropylenglykol) hat eine Reinheit >97% und kann als Redestillat wider als Spaltreagenz eingesetzt werden.

### Beispiel 6:

5000 g Dipropylenglykol und 5000 g PUR-Weichschaum werden analog zu Beispiel 5 umgesetzt, abgekühlt und als Feed mit 80°C einem Kurzwegverdampfer zugesetzt.

Im Gegensatz zu Beispiel 5 wird die Temperatur des Verdampfers auf 170°C erhöht und danach auf 80°C abgekühlt. Höhere Destillations-Temperaturen führen gemäß Beispiel 3 und 4 (bereits bei 140°C) zu nachteiligen Agglomeration und Molmasse-Aufbau bei längeren Destillationszeiten.

Bei einer Verdampfermantel-Temperatur von 170°C und einem Druck von 0,04 mbar wurden kontinuierlich 48,4 Gew.-% abdestilliert (96,8% des Spaltreagenzes). Das verbleibende Stoffgemisch (51,6%) ist flüssig, feindispers und absolut lagerstabil. Die Hydroxylzahl des Stoffgemischs beträgt 92 mg KOH/g. Die Viskosität liegt bei 3605 mPas/25°C.

Aufgrund der extrem niedrigen Verweilzeit im Verdampfer von nur 2 min konnten die negativen Effekte wie Molmasse-Aufbau und/oder Agglomeration/Separation auch bei höheren Destillations-Temperaturen vermieden werden.

### Beispiel 7:

Ein Kunststoffsolvolysegemisch hergestellt aus 500g Diethylenglykol und 500g PUR Integralschaum enthält 0,12 % 1,4-Dioxan, welches als Nebenprodukt durch die säurekatalysierte Reaktion von Diethylenglykol entsteht.

1,4-Dioxan ist als krebserregend eingestuft und daher in den Kunststoffsolvolyseprodukten nachteilig. Nach der Destillation im Kurzweg-/Dünnschichtverdampfer gemäß Beispiel 5 reduziert sich der 1,4-Dioxan-Gehalt auf <0,01%. D.h., neben der Abdestillation des Spaltreagenzes werden vorteilhafterweise auch Nebenprodukte oder Fraktionen abgetrennt und somit reinere und emissionsarme Stoffgemische erhalten.

Die folgenden Punkte sind Gegenstand der Erfindung:
1. Verfahren zum Aufreinigen eines Kunststoffsolvolysegemischs, umfassend die Schritte:
   (a) Bereitstellen des Kunststoffsolvolysegemischs;
   (b) Behandeln des Kunststoffsolvolysegemischs bei einem Druck < 1 mbar und einer Temperatur im Bereich von 90 bis 170 °C; und
   (c) Entfernen von mindestens einer Verbindung mit einer molaren Masse von ≤ 250 g/mol während Schritt (b) um ein Stoffgemisch zu erhalten.
2. Verfahren nach Punkt 1, wobei das Kunststoffsolvolysegemisch erhältlich ist durch Solvolyse mindestens eines Polymers, ausgewählt aus der Gruppe, bestehend aus Polyurethan, Polyester, Polyetherester, Polyamid, Polycarbonat, Polyisocyanurat, bevorzugt Polyurethan und Polyester, stärker bevorzugt Polyurethan, insbesondere Polyesterpolyurethan und/oder Polyetherpolyurethan.
3. Verfahren nach Punkt 2, wobei die Solvolyse eine Glykolyse, Alkoholyse, Acidolyse, Aminolyse oder Hydrolyse ist, bevorzugt eine Alkoholyse oder eine Aminolyse, stärker bevorzugt eine Alkoholyse.
4. Verfahren nach Punkt 3, wobei die Alkoholyse durchgeführt wird unter Verwendung mindestens eines Monoalkohols, insbesondere Methanol, Ethanol, Propanol, Butanol, Pentanol und/oder Hexanol, eines Diols, insbesondere Ethylenglykol, Diethylenglykol, Polyethylenglykol, Propylenglykol, Dipropylenglykol, Polypropylenglykol, Butandiol, Pentandiol und/oder Hexandiol, eines Triols, insbesondere Glycerin und/oder Trimethylolpropan, und/oder eines Tetrols, insbesondere Pentaaerythrol und/oder Hydroxycarbonsäure, insbesondere Rizinolsäure und Milchsäure bevorzugt unter Verwendung mindestens eines Monoalkohols und/oder eines Diols, stärker bevorzugt unter Verwendung mindestens eines Diols, als Spaltreagenz.
5. Verfahren nach Punkt 3, wobei die Acidolyse durchgeführt wird unter Verwendung mindestens einer Polycarbonsäure, insbesondere einer Dicarbonsäure, wie zum Beispiel Bernsteinsäure, Glutarsäure, Adipinsäure, Hexandicarbonsäure, Heptandicarbonsäure, Azealinsäure, Sebacinsäure, Decandicarbonsäure, Dodecandicarbonsäure und/oder Phthalsäure, und/oder einer Tricarbonsäure, wie zum Beispiel Trimelittsäure, und/oder unter Verwendung mindestens eines Polycarbonsäureanhydrids, insbesondere eines Dicarbonsäureanhydrids, wie zum Beispiel Bernsteinsäure-, Glutarsäure-, Adipinsäure-, Hexandicarbonsäure-, Azealinsäure- und/oder Phthalsäureanhydrid, und/oder eines Tricarbonsäureanhydrids, wie zum Beispiel Trimelittsäureanhydrid, besonders bevorzugt unter Verwendung mindestens einer Polycarbonsäure, stärker bevorzugt unter Verwendung mindestens einer Dicarbonsäure, als Spaltreagenz.
6. Verfahren nach Punkt 3, wobei die Aminolyse durchgeführt wird unter Verwendung mindestens eines Polyamins, insbesondere mindestens eines Diamins, wie zum Beispiel Ethandiamin, Propandiamin, Butandiamin und/oder Hexandiamin, und/oder eines Triamins, wie zum Beispiel Ethantriamin, Propantriamin, Butantriamin, Pentantriamin, Hexantriamin und/oder Hydroxylamin, wie zum Beispiel Ethanolamin, bevorzugt unter Verwendung mindestens eines Diamins, als Spaltreagenz.
7. Verfahren nach Punkt 3, wobei die Hydrolyse unter Verwendung von Wasser als Spaltreagenz durchgeführt wird.
8. Verfahren nach einem der Punkte 2 bis 7, wobei die Solvolyse ferner durchgeführt wird unter Verwendung mindestens eines Katalysators geeignet zum Abbau von Kunststoffen, insbesondere eines basischen und/oder metallorganischen Katalysators.
9. Verfahren nach Punkt 8, wobei der mindestens eine basische Katalysator ausgewählt ist aus der Gruppe, bestehend aus Alkalimetallalkoholat, insbesondere Natriummethanolat, Kaliummethanolat, Natriumethanolat, Kaliumethanolat, Natriumpropanolat, Kaliumpropanolat, Natriumbutanolat und/oder Kaliumbutanolat, Alkalimetallhydroxid, insbesondere Natriumhydroxid und/oder Kaliumhydroxid, und Alkalimetallacetat, insbesondere Natriumacetat und Kaliumacetat.
10. Verfahren nach Punkt 8, wobei der mindestens eine metallorganische Katalysator ausgewählt ist aus der Gruppe, bestehend aus Zink-Acetat, Magnesium-Acetat, Cobalt-Acetat, Zinn-Octoat, Dibutylzinndilaurat, Titantetraisopropanolat und Titantetrabutanolat.
11. Verfahren nach einem der Punkte 2-10, wobei die Solvolyse durchgeführt wird
   bei erhöhter Temperatur, insbesondere bei einer Temperatur im Bereich 30-300 °C, bevorzugt 100-250 °C, stärker bevorzugt 140-220 °C; und
   ggf. bei erhöhtem Druck, insbesondere bei einem Druck von 1-200 bar, bevorzugt 5-50 bar, stärker bevorzugt 10-30 bar.
12. Verfahren nach einem der vorhergehenden Punkte, wobei das Kunststoffsolvolysegemisch mindestens ein Kunststoffabbauprodukt, mindestens ein Spaltreagenz und ggf. mindestens einen Katalysator umfasst.
13. Verfahren nach einem der vorhergehenden Punkte, wobei das Kunststoffsolvolysegemisch umfasst:
   i. mindestens ein Polyol und/oder Polyamin, bevorzugt mit einer molaren Masse im Bereich von 50-10.000 g/mol, stärker bevorzugt 60-6.000 g/mol; und
   ii. mindestens ein Spaltreagenz ausgewählt aus Alkohol, Polycarbonsäure, Polycarbonsäureanhydrid, Polyamin und/oder Wasser, mit einer molaren Masse von ≤ 250 g/mol, bevorzugt im Bereich von 15 bis 180 g/mol.
14. Verfahren nach Punkt 13, wobei das Polyol in Komponente i. ein aliphatisches Polyol, ein aromatisches Polyol, ein Polyesterpolyol und/oder ein Polyetherpolyol ist, bevorzugt ein aliphatisches Diol, ein aromatisches Diol, ein Polyesterdiol und/oder ein Polyetherdiol.
15. Verfahren nach einem der Punkte 13-14, wobei das Polyol in Komponente i. eine molare Masse im Bereich von 50-10.000 g/mol, stärker bevorzugt 60-6.000 g/mol aufweist.
16. Verfahren nach einem der Punkte 13-15, wobei das Polyamin in Komponente i. ein aliphatisches Polyamin, ein aromatisches Polyamin, ein Polyesterpolyamin und/oder ein Polyetherpolyamin ist, bevorzugt ein aliphatisches Diamin, ein aromatisches Diamin, ein Polyesterdiamin und/oder ein Polyetherdiamin.
17. Verfahren nach einem der Punkte 13-16, wobei das Polyamin in Komponente i. eine molare Masse im Bereich von 20-1000 g/mol, stärker bevorzugt 60-600 g/mol aufweist.
18. Verfahren nach einem der Punkte 13-17, wobei der mindestens eine Alkohol in Komponente ii. mindestens ein Monoalkohol, insbesondere Methanol, Ethanol, Propanol, Butanol, Pentanol und/oder Hexanol, Hydroxycarbonsäure, Hydroxylamin, ein Diol, insbesondere Ethylenglykol, Diethylenglykol, Polyethylenglykol, Propylenglykol, Dipropylenglykol, Polypropylenglykol, Butandiol, Pentandiol und/oder Hexandiol, ein Triol, insbesondere Glycerin und/oder Trimethylolpropan, und/oder ein Polyol ist, bevorzugt mindestens ein Monoalkohol und/oder ein Diol, stärker bevorzugt mindestens ein Diol.
19. Verfahren nach einem der Punkte 13-18, wobei die mindestens eine Polycarbonsäure in Komponente ii. mindestens eine Dicarbonsäure, insbesondere Bernsteinsäure, Glutarsäure, Adipinsäure, Hexandicarbonsäure, Azealinsäure und/oder Phthalsäure, und/oder eine Tricarbonsäure, insbesondere Trimelittsäure, ist.
20. Verfahren nach einem der Punkte 13-19, wobei das mindestens eine Polycarbonsäureanhydrid in Komponente ii. mindestens ein Dicarbonsäureanhydrid, insbesondere Bernsteinsäure-, Glutarsäure-, Adipinsäure-, Hexandicarbonsäure-, Azealinsäure- und/oder Phthalsäureanhydrid, und/oder ein Tricarbonsäureanhydrid, insbesondere Trimelittsäureanhydrid, ist.
21. Verfahren nach einem der Punkte 13-20, wobei das mindestens eine Polyamin in Komponente ii. mindestens ein Diamin, insbesondere Ethandiamin, Propandiamin, Butandiamin, Pentandiamin und/oder Hexandiamin, und/oder ein Triamin, insbesondere Ethantriamin, Propantriamin, Butantriamin und/oder Hexantriamin, ist, bevorzugt mindestens ein Diamin.
22. Verfahren nach einem der Punkte 13-21, wobei Komponente i. und Komponente ii. unterschiedlich sind.
23. Verfahren nach einem der Punkte 13-22, wobei das Kunststoffsolvolysegemisch ferner umfasst:
   iii. mindestens einen Katalysator, insbesondere geeignet zum Abbau von Kunststoffen, bevorzugt mindestens einen basischen Katalysator und/oder einen metallorganischen Katalysator; und
   iv. gegebenenfalls mindestens ein Additiv, insbesondere ausgewählt aus der Gruppe, bestehend aus Füllstoff, Pigment, Flammschutzmittel, Weichmacher und Stabilisator.
24. Verfahren nach Punkt 23, wobei der mindestens eine basische Katalysator mindestens ein Alkalimetallalkoholat, insbesondere Natriummethanolat, Kaliummethanolat, Natriumethanolat, Kaliumethanolat, Natriumpropanolat, Kaliumpropanolat, Natriumbutanolat und/oder Kaliumbutanolat, Alkalimetallhydroxid, insbesondere Natriumhydroxid und/oder Kaliumhydroxid, und/oder Alkalimetallacetat, insbesondere Natriumacetat und/oder Kaliumacetat, ist.
25. Verfahren nach Punkt 23, wobei der mindestens eine metallorganische Katalysator ausgewählt ist aus der Gruppe, bestehend aus Zink-Acetat, Magnesium-Acetat, Cobalt-Acetat, Zinn-Octoat, Dibutylzinndilaurat, Titantetraisopropanolat und Titantetrabutanolat.
26. Verfahren nach einem der Punkte 13 bis 25, wobei Komponente i. 5-80 Gew.-% bezogen auf die Gesamtmasse des Kunststoffsolvolysegemischs ausmacht.
27. Verfahren nach einem der Punkte 13 bis 26, wobei Komponente ii. 20-95 Gew.-% bezogen auf die Gesamtmasse des Kunststoffsolvolysegemischs ausmacht.
28. Verfahren nach einem der Punkte 23 bis 27, wobei die Komponente iii. 0-30 Gew.-% bezogen auf die Gesamtmasse des Kunststoffsolvolysegemischs ausmacht.
29. Verfahren nach einem der Punkte 23 bis 28, wobei die Komponente iv. 0-40 Gew.-% bezogen auf die Gesamtmasse des Kunststoffsolvolysegemischs ausmacht.
30. Verfahren nach einem der vorhergehenden Punkte, wobei der Druck in Schritt (b) < 1 mbar, bevorzugt ≤ 0,5 mbar, bevorzugt ≤ 0,1 mbar, stärker bevorzugt von 0,0001 bis 0,1 mbar, beträgt.
31. Verfahren nach einem der vorhergehenden Punkte, wobei die Temperatur in Schritt (b) im Bereich von 60-170 °C, bevorzugt von 80-150 °C, stärker bevorzugt von 90-130 °C, liegt.
32. Verfahren nach einem der vorhergehenden Punkte, wobei das Kunststoffsolvolysegemisch in Schritt (b) für2-10.000 Sekunden, bevorzugt 5-5.000 Sekunden, besonders bevorzugt 10-500 Sekunden behandelt wird.
33. Verfahren nach einem der vorhergehenden Punkte, wobei das Verfahren in einem Dünnschichtverdampfer oder einem Kurzwegverdampfer, bevorzugt in einem Kurzwegverdampfer.
34. Verfahren nach einem der vorhergehenden Punkte, wobei das Verfahren ein kontinuierliches Verfahren ist.
35. Verfahren nach einem der vorhergehenden Punkte, wobei die mindestens eine Verbindung in Schritt (c) eine molare Masse von 25-250 g/mol, bevorzugt von 30-200 g/mol, aufweist.
36. Verfahren nach einem der vorhergehenden Punkte, wobei die mindestens eine Verbindung in Schritt (c) Spaltreagenz umfasst und bevorzugt ausgewählt ist aus der Gruppe, bestehend aus Alkohol, Polycarbonsäure, Polycarbonsäureanhydrid, Carbonsäureester, Polyamin, Wasser und Formaldehyd.
37. Verfahren nach Punkt 36, wobei der Alkohol in Schritt (c) ein Monoalkohol, insbesondere Methanol, Ethanol, Propanol, Butanol, Pentanol und/oder Hexanol, ein Diol, insbesondere Ethylenglykol, Diethylenglykol, Polyethylenglykol, Propylenglykol, Dipropylenglykol, Polypropylenglykol, Butandiol, Pentandiol und/oder Hexandiol, ein Triol, insbesondere Glycerin und/oder Trimethylolpropan und/oder ein Polyol ist, bevorzugt ein Monoalkohol und/oder ein Diol, stärker bevorzugt ein Diol.
38. Verfahren nach Punkt 36, wobei die Polycarbonsäure in Schritt (c) eine Dicarbonsäure, insbesondere Bernsteinsäure, Glutarsäure, Adipinsäure, Hexandicarbonsäure, Azealinsäure und/oder Phthalsäure, und/oder eine Tricarbonsäure, insbesondere Trimelittsäure, ist.
39. Verfahren nach Punkt 36, wobei das Polycarbonsäureanhydrid in Schritt (c) ein Dicarbonsäureanhydrid, insbesondere Bernsteinsäure-, Glutarsäure-, Adipinsäure-, Hexandicarbonsäure-, Azealinsäure- und/oder Phthalsäureanhydrid, und/oder ein Tricarbonsäureanhydrid, insbesondere Trimelittsäureanhydrid, ist.
40. Verfahren nach Punkt 36, wobei das Polyamin in Schritt (c) ein Diamin, insbesondere Ethandiamin, Propandiamin, Butandiamin, Hexandiamin, Toluoldiamin und/oder Diaminodiphenylmethan, und/oder ein Triamin, insbesondere Ethantriamin, Propantriamin, Butantriamin und/oder Hexantriamin, ist, bevorzugt ein Diamin.
41. Verfahren nach einem der vorhergehenden Punkte, wobei das nach Schritt (c) erhaltene Stoffgemisch 0,05-50 Gew.-%, bevorzugt 0,1-20 Gew.-%, stärker bevorzugt 0,5-8 Gew.-%, der mindestens einen Verbindung in Schritt (c) enthält, bezogen auf das Gesamtgewicht des nach Schritt (c) erhaltenen Stoffgemischs.
42. Verfahren nach einem der vorhergehenden Punkte, wobei der Anteil der Verbindung in dem Stoffgemisch nach Schritt (c) gegenüber dem Anteil der Verbindung im Kunststoffsolvolysegemisch nach Schritt (a) um 80 % reduziert ist.
43. Verfahren nach einem der vorhergehenden Punkte, wobei das nach Schritt (c) erhaltene Stoffgemisch eine Hydroxylzahl (OHZ) im Bereich von 20-600 mg KOH, bevorzugt im Bereich von 50 bis 95 mg KOH, stärker bevorzugt 60-90 mg KOH aufweist.
44. Verwendung des nach Punkt 1 (c) erhaltenen Stoffgemischs zur Herstellung eines Polymers, insbesondere eines Polyurethans, Polyesters, Polycarbonats und/oder Polyamids, stärker bevorzugt eines Polyurethans und/oder Polyesters, noch stärker bevorzugt eines Polyurethans.
45. Stoffgemisch, erhältlich nach einem Verfahren gemäß einem der Punkte 1-43.

## Patentansprüche

1. Verfahren zum Aufreinigen eines Kunststoffsolvolysegemischs, umfassend die Schritte:
a. Bereitstellen des Kunststoffsolvolysegemischs erhältlich durch Solvolyse mindestens eines Polymers, ausgewählt aus der Gruppe, bestehend aus Polyurethan, Polyester, Polyetherester, Polyamid, Polycarbonat, Polyisocyanurat,
b. Behandeln des Kunststoffsolvolysegemischs bei einem Druck < 1 mbar und einer Temperatur im Bereich von 90 bis 170 °C; und
c. Entfernen von mindestens einer Verbindung mit einer molaren Masse von ≤ 250 g/mol während Schritt (b) um ein Stoffgemisch zu erhalten.

2. Verfahren nach Anspruch 1, wobei die Solvolyse eine Glykolyse, Alkoholyse, Acidolyse, Aminolyse oder Hydrolyse ist, bevorzugt eine Alkoholyse oder eine Aminolyse, stärker bevorzugt eine Alkoholyse, und bevorzugt durchgeführt wird
bei erhöhter Temperatur, insbesondere bei einer Temperatur im Bereich 30-300 °C, bevorzugt 100-250 °C, stärker bevorzugt 140-220 °C; und
ggf. bei erhöhtem Druck, insbesondere bei einem Druck von 1-200 bar, bevorzugt 5-50 bar, stärker bevorzugt 10-30 bar.

3. Verfahren nach einem der Ansprüche 1 oder 2, wobei das Kunststoffsolvolysegemisch ferner umfasst:
v. mindestens einen Katalysator, insbesondere geeignet zum Abbau von Kunststoffen, bevorzugt mindestens einen basischen Katalysator und/oder einen metallorganischen Katalysator; und
vi. gegebenenfalls mindestens ein Additiv, insbesondere ausgewählt aus der Gruppe, bestehend aus Füllstoff, Pigment, Flammschutzmittel, Weichmacher und Stabilisator.

4. Verfahren nach einem der vorhergehenden Ansprüche, wobei der Druck in Schritt (b) < 1 mbar, bevorzugt ≤ 0,5 mbar, bevorzugt ≤ 0,1 mbar, stärker bevorzugt von 0,0001 bis 0,1 mbar, beträgt, und
wobei die Temperatur in Schritt (b) bevorzugt im Bereich von 60-170 °C, bevorzugt von 80-150 °C, stärker bevorzugt von 90-130 °C, liegt, und
wobei das Kunststoffsolvolysegemisch in Schritt (b) für 2-10.000 Sekunden, bevorzugt 5-5.000 Sekunden, stärker bevorzugt 10-500 Sekunden behandelt wird.

5. Verfahren nach einem der vorhergehenden Ansprüche, wobei das Verfahren in einem Dünnschichtverdampfer oder einem Kurzwegverdampfer, bevorzugt in einem Kurzwegverdampfer durchgeführt wird.

6. Verfahren nach einem der vorhergehenden Ansprüche, wobei das Verfahren ein kontinuierliches Verfahren ist.

7. Verfahren nach einem der vorhergehenden Ansprüche, wobei die mindestens eine Verbindung in Schritt (c) eine molare Masse von 25-250 g/mol, bevorzugt von 30-200 g/mol, aufweist.

8. Verfahren nach einem der vorhergehenden Ansprüche, wobei die mindestens eine Verbindung in Schritt (c) Spaltreagenz umfasst und bevorzugt ausgewählt ist aus der Gruppe, bestehend aus Alkohol, Polycarbonsäure, Polycarbonsäureanhydrid, Carbonsäureester, Polyamin, Wasser und Formaldehyd.

9. Verfahren nach einem der vorhergehenden Ansprüche, wobei das nach Schritt (c) erhaltene Stoffgemisch 0,05-50 Gew.-%, bevorzugt 0,1-20 Gew.-%, stärker bevorzugt 0,5-8 Gew.-%, der mindestens einen Verbindung in Schritt (c) enthält, bezogen auf das Gesamtgewicht des nach Schritt (c) erhaltenen Stoffgemischs.

10. Verfahren nach einem der vorhergehenden Ansprüche, wobei der Anteil der Verbindung in dem Stoffgemisch nach Schritt (c) gegenüber dem Anteil der Verbindung im Kunststoffsolvolysegemisch nach Schritt (a) um 80 % reduziert ist.

11. Verfahren nach einem der vorhergehenden Ansprüche, wobei das nach Schritt (c) erhaltene Stoffgemisch eine Hydroxylzahl (OHZ) im Bereich von 20-600 mg KOH, bevorzugt im Bereich von 50 bis 95 mg KOH, stärker bevorzugt 60-90 mg KOH aufweist.

12. Verwendung des nach Anspruch 1 (c) erhaltenen Stoffgemischs zur Herstellung eines Polymers, insbesondere eines Polyurethans, Polyesters, Polycarbonats und/oder Polyamids, stärker bevorzugt eines Polyurethans und/oder Polyesters, noch stärker bevorzugt eines Polyurethans.

13. Stoffgemisch, erhältlich nach einem Verfahren gemäß einem der Ansprüche 1-11.
